# EUROPEAN PATENT APPLICATION

(11) **EP 4 707 747 A1**
(43) Date of publication of application: **11.03.2026**
(21) Application number: 25767640.3
(22) Date of filing: 03.03.2025
(51) Int. Cl.: G01D 5/245, G01D 5/12

(54) **MOTION DETECTION DEVICE**

(30) Priority: 06.03.2024 JP 2024033861
(71) Applicant: Oriental Motor Co., Ltd., Tokyo 111-0056 (JP)
(72) Inventor: HOUDA, Akihiko, Tsukuba-shi, Ibaraki 300-2635 (JP); SOMEYA, Masayuki, Tsukuba-shi, Ibaraki 300-2635 (JP)
(74) Representative: Witte, Weller & Partner Patentanwälte mbB
(86) International application number: PCT/JP2025/007544
(87) International publication number: WO 2025/187643

(57) **Abstract**

A motion detection device (5) includes a first supporting body (51), a second supporting body (52) that moves relative thereto, a power generation sensor (100) disposed on the first supporting body, and a magnetic field source (400) supported by the second supporting body. The power generation sensor includes a magnetic wire (110), a coil (120), and magnetic flux conducting pieces (130, 131). The magnetic flux conducting pieces include axially-orthogonal portions and axially-parallel portions and have wire placement portions to which the axially-orthogonal portions and both end portions of the magnetic wire are fixed. The power generation sensor is configured such that a region located on a side of the axially-parallel portions opposite from the magnetic wire serves as a detection region (140). The magnetic field source has a plurality of magnetic poles. The magnetic poles having different polarities sequentially enter the detection region along a track (30) parallel to an axial direction of the magnetic wire and oppose the power generation sensor. The direction of the magnetic flux of each magnetic pole is a direction perpendicular to the moving direction thereof and intersecting with the magnetic wire.

## Description

### TECHNICAL FIELD

The present invention relates to a motion detection device including a power generation sensor using a magnetic wire exhibiting a large Barkhausen effect.

### BACKGROUND ART

Magnetic wires having a large Barkhausen effect (large Barkhausen jump) are known in the name of Wiegand wire or pulse wire. Such a magnetic wire includes a core portion, and a shell portion provided around the core portion. One of the core portion and the shell portion is a soft (magnetically soft) layer in which its magnetization direction is reversed even by application of a weak magnetic field, and the other of the core portion and the shell portion is a hard (magnetically hard) layer in which its magnetization direction is reversed only by application of a strong magnetic field. A power generation sensor is produced by winding a coil around the magnetic wire.

When the hard layer and the soft layer are magnetized in the same direction axially of the wire and the strength of an external magnetic field applied in a direction opposite to that magnetization direction is increased to a certain magnetic field strength, the magnetization direction of the soft layer is reversed. The reversal of the magnetization direction starts at a certain position of the magnetic wire to propagate to the entire wire, whereby the magnetization direction of the soft layer is totally reversed. At this time, the large Barkhausen effect is exhibited to induce a pulse signal in the coil wound around the magnetic wire. When the external magnetic field strength is further increased to another certain magnetic field strength, the magnetization direction of the hard layer is reversed.

The magnetic field strength at which the magnetization direction of the soft layer is reversed is herein referred to as "operational magnetic field" and the magnetic field strength at which the magnetization direction of the hard layer is reversed is herein referred to as "stabilization magnetic field."

A voltage output from the coil is characteristically constant irrespective of the change rate of an input magnetic field (external magnetic field), and is free from chattering because of the hysteresis with respect to the input magnetic field. For this reason, the pulse signal output from the coil is used for a position detection device and the like. Since the output from the coil involves electric power, a sensor of power generation type (power generation sensor) that does not require the supply of external electric power can be provided.

In order to provide the large Barkhausen effect, it is necessary to reverse the magnetization direction of only the soft layer in a state such that the magnetization directions of the hard layer and the soft layer are consistent. Even if the magnetization direction of only the soft layer is reversed in a state such that the magnetization directions of the hard layer and the soft layer are inconsistent, no pulse signal is generated or a pulse signal having a very small amplitude is generated.

In order to maximize the available electric power, it is important that the reversal of the magnetization direction of the soft layer propagates to the entire magnetic wire from a state such that the magnetization direction of the magnetic wire is entirely consistent. If the magnetization direction of the magnetic wire is partly inconsistent, a pulse signal having a very small amplitude is generated. Therefore, it is preferred to apply a uniform magnetic field to the entire magnetic wire.

A motion detection device using the power generation sensor is disclosed in, for example, PTLs 1, 2, and 3.

PTL 1 discloses an arrangement that detects rotation around a rotation shaft. This arrangement includes a dipole magnet magnetized in a rotation shaft direction and a power generation sensor disposed to be radially offset from the rotation shaft. The power generation sensor is disposed such that an axial direction of a magnetic wire is parallel to a tangential direction of a circumference around the rotation shaft. When the rotation of the magnetic pole changes a magnetic field in the axial direction of the magnetic wire, and a unidirectional stabilization magnetic field is applied to be in a pulse generation preparation state, and then an operational magnetic field in an opposite direction is applied, a large Barkhausen effect is developed to generate a pulse voltage. PTL 1 proposes that the strength of magnetization of the magnet is changed to increase the change in a magnetic flux density with respect to a rotation angle and suppress variation in a pulse voltage generation position. The change in magnetic flux density in the vicinity of the magnetic wire with respect to a magnetization state of FIG. 2 of PTL 1 is indicated by a line M1 in FIG. 3 of PTL 1. In this case, although the variation in the pulse voltage generation position can be suppressed by the steep magnetic flux change, a flat portion in which the magnetic flux density does not change in the vicinity of 0 is generated. Therefore, a phase difference of the pulse voltage generation position due to a rotation direction becomes large. FIG. 4 of PTL 1 shows an arrangement in which a region where the strength of magnetization is changed is devised. In this case, the change in magnetic flux density is as indicated by a line M3 in FIG. 5 of PTL 1, and a flat portion in which the magnetic flux density is in the vicinity of 0 is not generated.

However, in the arrangement in which the power generation sensor is offset with respect to the dipole magnet, there is an angular section in which both ends of the power generation sensor oppose magnetic poles having the same polarity, and the angular section becomes wider as the arrangement of the power generation sensor becomes farther from the rotation center. Therefore, the characteristic that the flat portion is not generated in the magnetic flux density change as indicated by the line M3 in FIG. 5 of PTL 1 is limited to the case where the power generation sensor is disposed near the rotation center. Therefore, for example, the arrangement cannot be applied to rotation detection of a hollow shaft having a large diameter. In addition, the change in magnetic flux density with respect to the rotation angle is not necessarily sufficiently steep, and the generation position of the pulse voltage varies.

In the arrangement of FIG. 2 of PTL 2, a power generation sensor is disposed in a radial direction with respect to a ring-shaped magnet in which a half region in a circumferential direction is divided into an inner peripheral side and an outer peripheral side to be divided into four regions in total and magnetization is performed to these regions. In this case, when the direction of a boundary of the magnetization region in a circumferential direction and the axial direction of a magnetic wire of the power generation sensor coincide with each other, the magnetic flux density in the vicinity of the magnetic wire becomes 0, and the magnetic flux density greatly changes in the vicinity thereof. Therefore, the variation in a pulse voltage generation position is small, and a phase difference of the pulse voltage generation position due to forward rotation/reverse rotation is also small.

However, since a special magnetized ring magnet having a width close to the length of the power generation sensor is required, the cost of the magnet increases. In addition, there is a problem that magnet weight and inertia becomes large. In addition, when making detection devices having different sizes, a magnet dedicated to each size of the detection devices is required.

FIG. 30A of PTL 2 shows an arrangement devised to obtain similar characteristics using a rod magnet instead of a ring magnet. However, since a long axis direction of the power generation sensor is disposed in the radial direction, a large width is required in the radial direction, and accordingly, the detection device becomes large. In addition, when the rotation detection device of the hollow shaft is configured, there is a problem that a ratio of the hollow diameter to the outer diameter cannot be increased.

FIG. 6 of PTL 3 discloses an arrangement in which a plurality of individual magnets magnetized in a radial direction are disposed in a circumferential direction without using a ring magnet and a long axis direction of a power generation sensor is disposed in the radial direction. The plurality of individual magnets are disposed along the circumference such that directions of magnetic poles are alternately different. In the case of using the individual magnet, unlike a ring magnet, a dedicated magnet is not necessary even in the case of making detection devices having different sizes, and a general-purpose dipole magnet can be used, so that the magnet cost is low.

However, since the power generation sensor does not oppose the magnetic pole in an angular region between the adjacent magnets, there is an angular section in which a magnetic flux density becomes flat in the vicinity of 0. Therefore, a phase difference due to a rotation direction increases. Further, since the change in magnetic flux density with respect to the angle is gentle, variation in a generation position of a pulse voltage also becomes large.

### CITATION LIST

### PATENT LITERATURE

PTL 1: Japanese Patent No. 6647478
PTL 2: WO 2016/010141 A1
PTL 3: U.S. Patent No. 8283914

### SUMMARY OF INVENTION

### PROBLEMS TO BE SOLVED BY INVENTION

An example embodiment of the present invention provides a motion detection device that solves at least one of the above-described problems that occur in the prior art.

### SOLUTION TO PROBLEMS

According to an example embodiment of the present invention, there is provided a motion detection device including a first supporting body, a second supporting body that moves relative to the first supporting body, a power generation sensor disposed on the first supporting body, and a magnetic field source supported by the second supporting body. The power generation sensor includes a magnetic wire configured to exhibit a large Barkhausen effect, a coil wound around the magnetic wire, and a pair of magnetic flux conducting pieces that include a pair of magnetically-soft bodies symmetrical with each other with respect to a symmetry plane defined at a center position of the magnetic wire in an axial direction. The pair of magnetic flux conducting pieces include a pair of axially-orthogonal portions which extend parallel to each other from both end portions of the magnetic wire in an axially-orthogonal direction orthogonal to the axial direction and a pair of axially-parallel portions which extend toward each other from distal end portions of the pair of axially-orthogonal portions in the axial direction and have adjacent ends opposing each other with a gap therebetween in the axial direction, and the pair of magnetic flux conducting pieces have wire placement portions that are formed of holes or grooves passing through in the axial direction to which the axially-orthogonal portions and both end portions of the magnetic wire are fixed. The power generation sensor is configured to have a detection region located on a side of the axially-parallel portions opposite from the magnetic wire. The magnetic field source includes a plurality of magnetic poles that are disposed on the second supporting body such that when the second supporting body moves relative to the first supporting body, the magnetic poles sequentially enter the detection region along a track parallel to the axial direction of the magnetic wire and the magnetic poles having different polarities alternately oppose the power generation sensor with a gap therebetween. A direction of a magnetic flux of each magnetic pole is a direction (gap direction) perpendicular to a moving direction of the magnetic pole (moving direction of the magnetic pole when the second supporting body relatively moves to the first supporting body) and intersecting with the magnetic wire when the magnetic pole opposes the power generation sensor. An arrangement interval of the plurality of magnetic poles on the track is larger than an entire length of the magnetic wire. A length of the magnetic pole on the track is smaller than the entire length of the magnetic wire and 50% or less of the arrangement interval.

With this arrangement, when the magnetic pole passes through the detection region of the power generation sensor, a magnetic flux density passing through the magnetic wire steeply changes from a stabilization magnetic field in one direction to a stabilization magnetic field in the other direction, and a flat portion in which the change in magnetic flux density stagnates is not generated in the process of this change. Therefore, it is possible to provide a motion detection device in which the variation in the pulse generation position is small and the difference in the pulse generation position due to a moving direction is small.

In addition, the magnetic field source having a plurality of magnetic poles that generate a magnetic flux in a direction (gap direction) perpendicular to the moving direction of the magnetic poles and intersecting with the magnetic wire when opposing the power generation sensor can be configured using a plurality of individual magnets magnetized in the gap direction. Such an individual magnet may be, for example, a general-purpose dipole magnet that can be magnetized by an air-core coil, so that the magnet cost can be reduced. In addition, since the magnetization direction is the gap direction, the assembly work of fixing the individual magnet to the second supporting body is easy, so that the assembly cost can be reduced.

The length of the magnetic pole on the track is preferably half or less of the entire length of the magnetic wire. As a result, the change in the magnetic flux density when the magnetic pole passes through the detection region can be made more steep.

In addition, the arrangement interval of the magnetic poles on the track is preferably 1.5 times or more the entire length of the magnetic wire. As a result, when a certain magnetic pole passes through the detection region, the influence of the magnetic field from another magnetic pole can be suppressed, so that the change in the magnetic flux density can be made more steep.

The motion detection device preferably further includes a sensor to determine a polarity of the magnetic pole located in a central portion of the power generation sensor in the axial direction. With this arrangement, the motion direction can be detected in addition to the detection of the position.

### BRIEF DESCRIPTION OF DRAWINGS

[FIGS. 1A-1B] FIG. 1A is a plan view of a rotation detection device of a first comparative example, and FIG. 1B is a front view thereof.
[FIG. 1C] FIG. 1C is a waveform diagram showing a change in magnetic flux density with respect to a rotation angle in the rotation detection device of the first comparative example.
[FIGS. 2A-2B] FIG. 2A is a plan view of a rotation detection device of a second comparative example, and FIG. 2B is a front view thereof.
[FIG. 2C] FIG. 2C is a waveform diagram showing a change in magnetic flux density with respect to a rotation angle in the rotation detection device of the second comparative example.
[FIGS. 3A-3B] FIG. 3A is a plan view of a rotation detection device of a third comparative example, and FIG. 3B is a front view thereof.
[FIG. 3C] FIG. 3C is a waveform diagram showing a change in magnetic flux density with respect to a rotation angle in the rotation detection device of the third comparative example.
[FIGS. 4A-4B] FIG. 4A is a plan view of a rotation detection device of a fourth comparative example, and FIG. 4B is a front view thereof.
[FIG. 4C] FIG. 4C is a waveform diagram showing a change in magnetic flux density with respect to a rotation angle in the rotation detection device of the fourth comparative example.
[FIGS. 5A-5B] FIG. 5A is a plan view of a rotation detection device of an example embodiment of the present invention, and FIG. 5B is a front view thereof.
[FIG. 5C] FIG. 5C is a waveform diagram showing a change in magnetic flux density with respect to a rotation angle in the rotation detection device of the above example embodiment.
[FIG. 6A] FIG. 6A is a perspective view for showing a configuration example of a power generation sensor according to the example embodiment of the present invention.
[FIG. 6B] FIG. 6B is a front view of the above power generation sensor.
[FIG. 7A] FIG. 7A is a perspective view for showing a structural example of a rotation detection device according to another example embodiment of the present invention.
[FIG. 7B] FIG. 7B is a plan view of the rotation detection device of FIG. 7A.
[FIG. 7C] FIG. 7C is a front view of the rotation detection device of FIG. 7A.
[FIG. 8] FIG. 8 is a plan view for describing a structure of a rotation detection device according to another example embodiment of the present invention.

### DESCRIPTION OF EXAMPLE EMBODIMENTS

In the following, for an understanding of the principles of example embodiments of the present invention, several comparative examples are shown, and then the example embodiments of the present invention will be described.

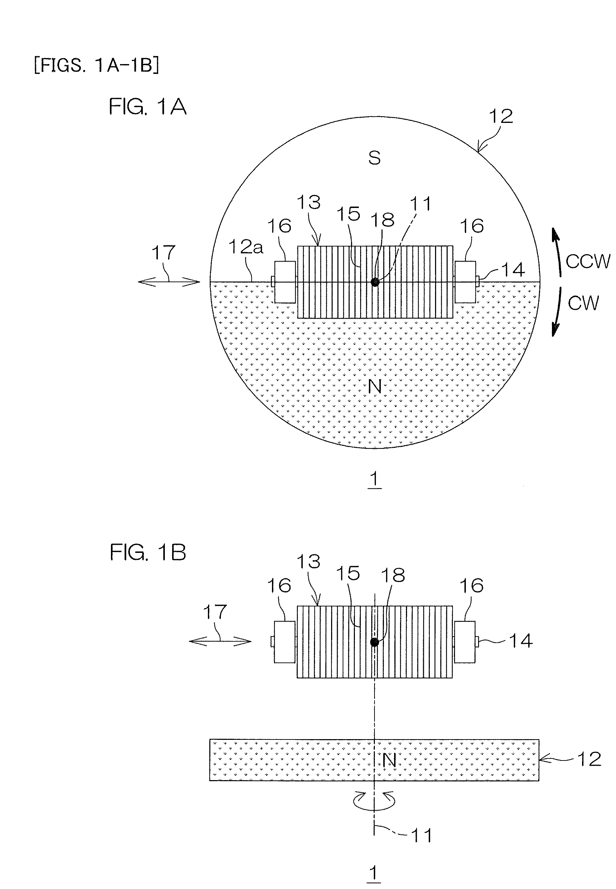

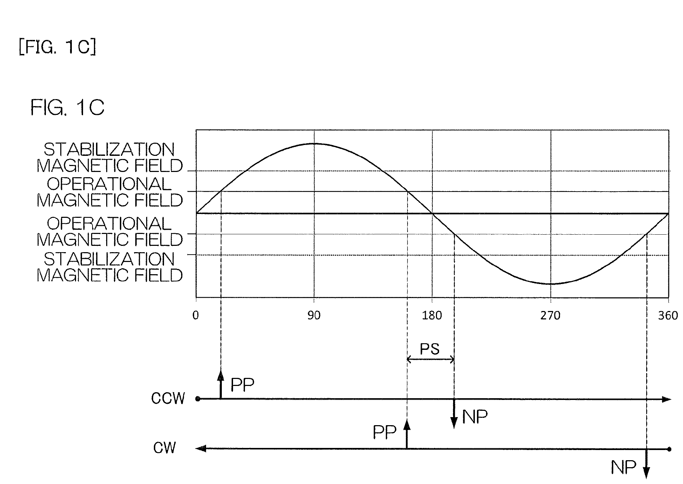

FIG. 1A and FIG. 1B show a rotation detection device 1 of a first comparative example, and FIG. 1C shows a change in magnetic flux density with respect to a rotation angle.

This rotation detection device 1 includes a dipole magnet 12 that rotates around a rotation axis 11 and a power generation sensor 13 in which a magnetic wire 14 is disposed so as to be orthogonal to the rotation axis 11. The power generation sensor 13 includes the magnetic wire 14, a coil 15 wound around the magnetic wire 14, and a pair of cylindrical ferrite cores 16 coupled to both end portions of the magnetic wire 14. An axial direction 17 of the magnetic wire 14 is orthogonal to the rotation axis 11, and an axially-central position 18 (center position in the axial direction 17) of the magnetic wire 14 is on the rotation axis 11. The dipole magnet 12 has a disk shape, is magnetized in a radial direction, a half region is an N pole, and the remaining half region is an S pole.

Assuming that an angle in FIG. 1A at which the axial direction 17 of the magnetic wire 14 and a magnetic pole boundary line 12a are aligned is 0 degrees and a value of the angle increases in a counterclockwise direction CCW, the change in magnetic flux density accompanied by the rotation of the dipole magnet 12 around the rotation axis 11 has a sinusoidal wave shape as illustrated in FIG. 1C. The magnetic flux density here refers to a magnetic flux density passing through the magnetic wire 14, that is, a density of a magnetic flux component in a direction parallel to the axial direction 17 of the magnetic wire 14 in the vicinity of the magnetic wire 14. The same applies to other comparative examples and example embodiments which will be described below. An operational magnetic field and a stabilization magnetic field of the magnetic wire 14 are shown in conjunction with FIG. 1C.

When the dipole magnet 12 rotates in the counterclockwise direction CCW, a positive pulse preparation state (positive set state) is established when the magnetic flux density falls below a negative stabilization magnetic field, and thereafter, a positive pulse PP is generated when the magnetic flux density exceeds a positive operational magnetic field. In addition, when the dipole magnet 12 rotates in the counterclockwise direction CCW, a negative pulse preparation state (negative set state) is established when the magnetic flux density exceeds a positive stabilization magnetic field, and thereafter, a negative pulse NP is generated when the magnetic flux density falls below a negative operational magnetic field. Therefore, as illustrated in FIG. 1C, the positive pulse PP is generated in the vicinity of 0 degrees, and the negative pulse NP is generated in the vicinity of 180 degrees.

Similarly, when the dipole magnet 12 rotates in a clockwise direction CW, a positive pulse preparation state (positive set state) is established when the magnetic flux density falls below a negative stabilization magnetic field, and thereafter, a positive pulse PP is generated when the magnetic flux density exceeds a positive operational magnetic field. In addition, when the dipole magnet rotates in the clockwise direction CW, a negative pulse preparation state (negative set state) is established when the magnetic flux density exceeds a positive stabilization magnetic field, and thereafter, a negative pulse NP is generated when the magnetic flux density falls below a negative operational magnetic field. Therefore, as illustrated in FIG. 1C, the negative pulse NP is generated in the vicinity of 0 degrees, and the positive pulse PP is generated in the vicinity of 180 degrees.

Since there is a finite inclination in the change in magnetic flux density with respect to the angle, a pulse generation position (angle at which the pulse is generated) does not coincide between the rotation in the counterclockwise direction CCW and the rotation in the clockwise direction CW, and a shift of the pulse generation position, that is, a phase difference PS, occurs. More specifically, the phase difference PS occurs in the vicinity of 0 degrees and in the vicinity of 180 degrees.

In this comparative example, as illustrated in FIG. 1C, since the change in magnetic flux density with respect to the rotation angle is gentle, the variation in the pulse generation position is large, and the phase difference PS due to the rotation direction is also large.

Since the power generation sensor 13 is disposed on the rotation axis 11, the configuration of this comparative example cannot be applied to a configuration in which mechanical parts are coupled to both ends of the rotation shaft, and a hollow shaft-shaped detection device also cannot be configured.

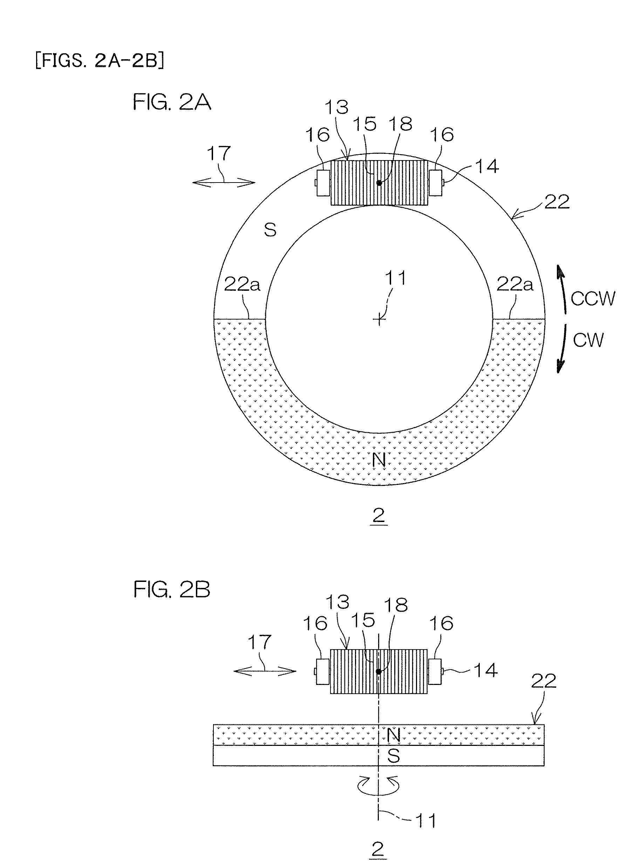

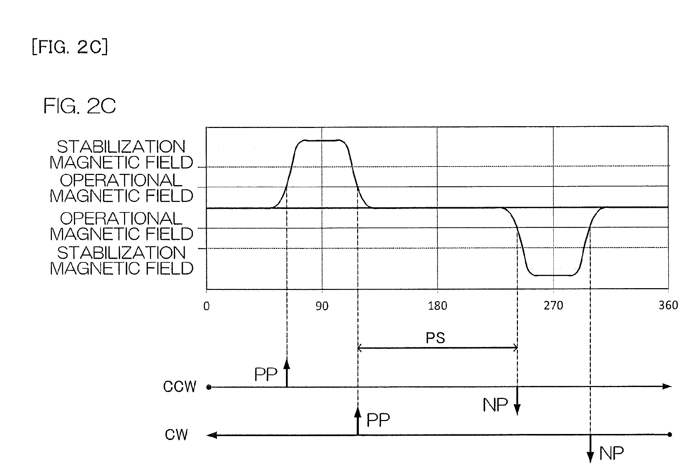

FIG. 2A and FIG. 2B show a rotation detection device 2 of a second comparative example, and FIG. 2C shows a change in magnetic flux density with respect to a rotation angle.

This rotation detection device 2 includes a dipole magnetized ring magnet 22 that rotates around a rotation axis 11 and a power generation sensor 13. The configuration of the power generation sensor 13 is similar to that of the first comparative example. An axially-central position 18 of a magnetic wire 14 is radially offset from the rotation axis 11, and an axial direction 17 of the magnetic wire 14 is perpendicular to the rotation axis 11 and extends in a tangential direction at a point on a circumference around the rotation axis 11. The dipole magnetized ring magnet 22 has an annular shape centered on the rotation axis 11 and is magnetized in a direction parallel to the rotation axis 11, and on a surface opposing the power generation sensor 13 with a gap therebetween, a half angular region is an N pole and the remaining half angular region is an S pole.

Assuming that an angle in FIG. 2A at which the axial direction 17 of the magnetic wire 14 and a magnetic pole boundary line 22a are parallel to each other is 0 degrees and a value of the angle increases in a counterclockwise direction CCW, the change in magnetic flux density accompanied by the rotation of the dipole magnetized ring magnet 22 around the rotation axis 11 has a trapezoidal wave shape as illustrated in FIG. 2C.

The operation of the power generation sensor 13 due to the change in magnetic flux density is similar to that of the first comparative example.

Since the magnetic flux density is 0 in the angular region where both end portions of the power generation sensor 13 oppose magnetic poles having the same polarity, flat portions with the magnetic flux density of 0 respectively centered on 0 degrees and 180 degrees appear. Accordingly, a large phase difference PS due to the rotation direction occurs in the vicinity of 0 degrees and in the vicinity of 180 degrees. This phase difference PS increases as the offset from the rotation axis 11 to the power generation sensor 13 becomes large.

Since the configuration of this comparative example requires the ring magnet 22 magnetized over the entire circumference, it is necessary to prepare a dedicated magnetization yoke for manufacturing the ring magnet 22. In addition, the ring magnet 22 that matches the size (diameter) of the detection device is required. Therefore, since a magnet having versatility cannot be used, there is also a problem that the magnet cost increases.

The configuration of PTL 1 can be classified into a category of the second comparative example.

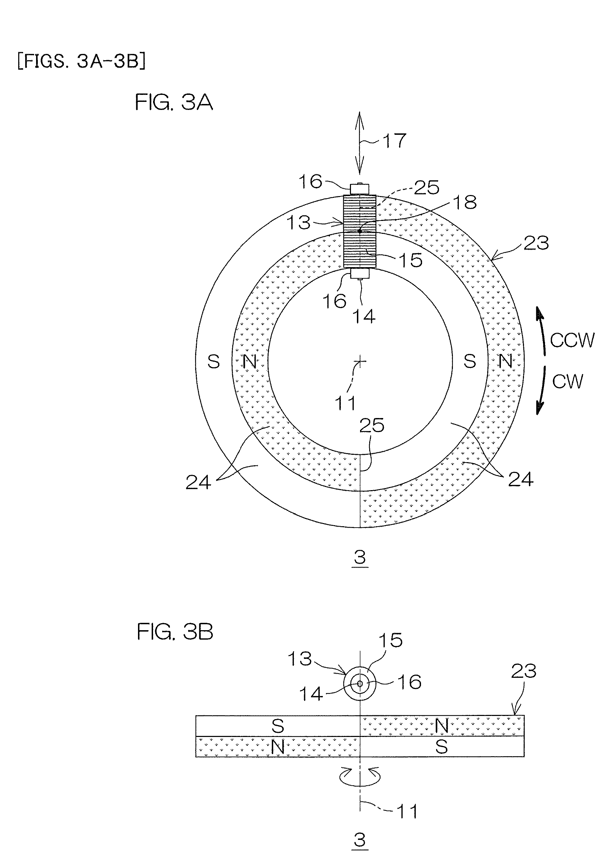

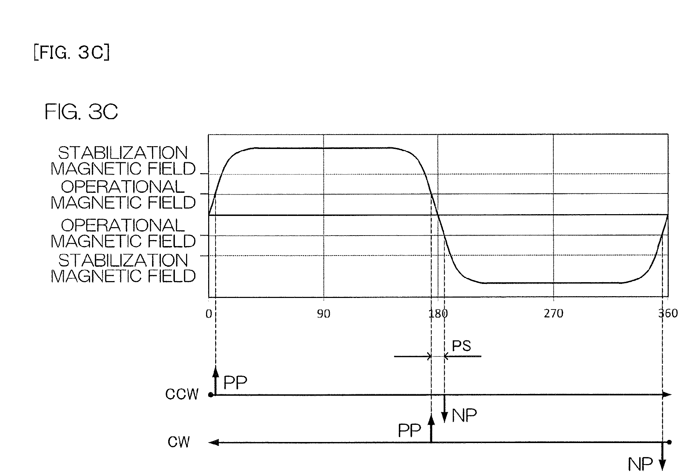

FIG. 3A and FIG. 3B show a rotation detection device 3 of a third comparative example, and FIG. 3C shows a change in magnetic flux density with respect to a rotation angle.

This rotation detection device 3 includes a ring magnet 23 that rotates around a rotation axis 11 and a power generation sensor 13. The configuration of the power generation sensor 13 is similar to that of the first comparative example. An axially-central position 18 of a magnetic wire 14 is radially offset from the rotation axis 11, and an axial direction 17 of the magnetic wire 14 extends in the radial direction. The ring magnet 23 has an annular shape centered on the rotation axis 11, is multipolar-magnetized in a direction parallel to the rotation axis 11, and has four magnetization regions 24 on a surface opposing the power generation sensor 13 with a gap therebetween.

Specifically, the surface of the ring magnet 23 opposing the power generation sensor 13 is divided into two in the radial direction, that is, an inner diameter portion and an outer diameter portion, and divided into two in the circumferential direction around the rotation axis 11 to be divided into four magnetization regions 24. More specifically, a half angular region of the inner diameter portion is an arc-shaped N-pole region, and the remaining half angular region is an arc-shaped S-pole region. In addition, a half angular region of the outer diameter portion is an arc-shaped S-pole region, and the remaining half angular region is an arc-shaped N-pole region. The N-pole region of the outer diameter portion is adjacent to the outer side of the S-pole region of the inner diameter portion, and the S-pole region of the outer diameter portion is adjacent to the outer side of the N-pole region of the inner diameter portion. A boundary of the magnetization region 24 in the circumferential direction is aligned between the inner diameter portion and the outer diameter portion, and a magnetic pole boundary line 25 extends in the radial direction.

Assuming that an angle in FIG. 3A at which the axial direction 17 of the magnetic wire 14 and the magnetic pole boundary line 25 are parallel to each other is 0 degrees and a value of the angle increases in a counterclockwise direction CCW, the change in magnetic flux density accompanied by the rotation of the ring magnet 23 around the rotation axis 11 has a trapezoidal wave shape as illustrated in FIG. 3C.

The operation of the power generation sensor 13 due to the change in magnetic flux density is similar to that of the first comparative example.

The change in magnetic flux density in the vicinity of 0 degrees and 180 degrees at which the magnetic flux density becomes 0 is steep, and thus the variation in the pulse generation position is small and the phase difference PS due to the rotation direction is also small.

On the other hand, since a long axis direction of the power generation sensor 13 is the radial direction, there is a problem that the outer diameter of the detection device becomes large.

In addition, since the configuration of this comparative example also requires the ring magnet 23 magnetized over the entire circumference, it is necessary to prepare a dedicated magnetization yoke for manufacturing the ring magnet 23. In addition, the ring magnet 23 that matches the size (diameter) of the detection device is required. Therefore, since a magnet having versatility cannot be used, there is also a problem that the magnet cost increases.

The configuration of PTL 2 can be classified into a category of the third comparative example.

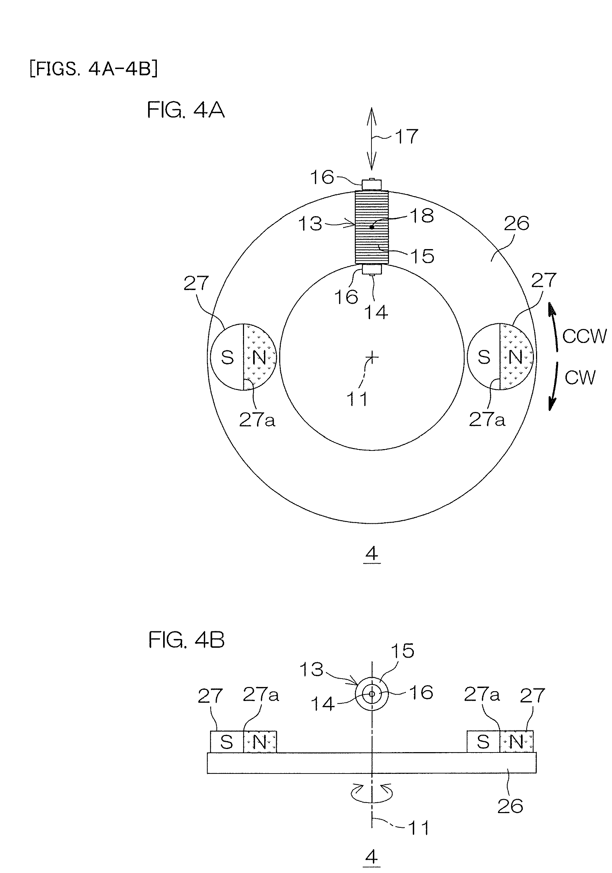

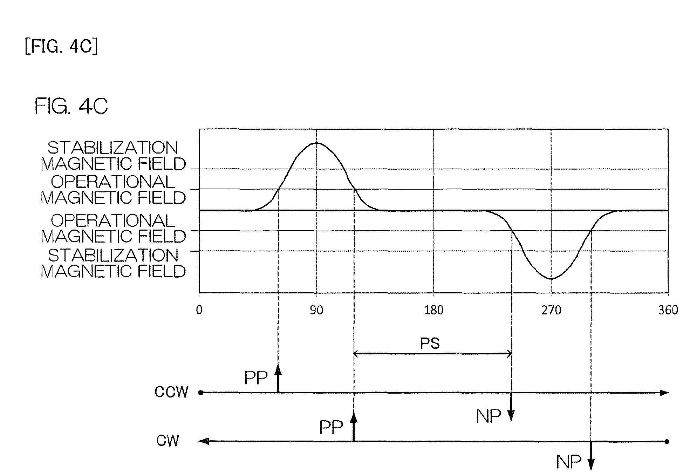

FIG. 4A and FIG. 4B show a rotation detection device 4 of a fourth comparative example, and FIG. 4C shows a change in magnetic flux density with respect to a rotation angle.

This rotation detection device 4 includes a ring-shaped support substrate 26 that rotates around a rotation axis 11, two individual magnets 27 disposed on the support substrate 26 with an interval therebetween in the circumferential direction, and a power generation sensor 13. The configuration of the power generation sensor 13 is similar to that of the first comparative example.

An axially-central position 18 of a magnetic wire 14 is radially offset from the rotation axis 11, and an axial direction 17 of the magnetic wire 14 extends in the radial direction. The two individual magnets 27 are magnetized in the radial direction and are disposed at an angular interval of 180 degrees around the rotation axis 11. One of the two individual magnets 27 is fixed to the support substrate 26 with an N pole disposed inward near the rotation axis 11, and the other thereof is fixed to the support substrate 26 with an S pole disposed inward near the rotation axis 11. A magnetic pole boundary line 27a of each individual magnet 27 extends in a tangential direction of a circumference around the rotation axis 11 (more precisely, a tangential direction at a position of each individual magnet 27). Each of the individual magnets 27 is disposed on the support substrate 26 such that one magnetic pole opposes one end portion of the magnetic wire 14 and the other magnetic pole opposes the other end portion of the magnetic wire 14 when the individual magnets 27 oppose the power generation sensor 13.

Assuming that an angle in FIG. 4A at which the power generation sensor 13 is located in the middle between the two individual magnets 27 is 0 degrees and a value of the angle increases in a counterclockwise direction CCW, the change in magnetic flux density accompanied by the rotation of the individual magnets 27 around the rotation axis 11 has a waveform as illustrated in FIG. 4C.

The operation of the power generation sensor 13 due to the change in magnetic flux density is similar to that of the first comparative example.

In this comparative example, since the change in magnetic flux density with respect to the angle is small, variation in a generation position of a pulse voltage is likely to occur. Further, the vicinity of 0 degrees and 180 degrees at which the magnetic flux density becomes 0 is a flat portion which belongs to an angular section between the adjacent individual magnets 27 and in which the magnetic flux density does not change. Therefore, a phase difference PS due to a rotation direction is large.

In addition, as in the third comparative example, since a long axis direction of the power generation sensor 13 is the radial direction, there is a problem that the outer shape of the detection device becomes large.

On the other hand, in this comparative example, since a general-purpose dipole magnet that can be magnetized by an air-core coil can be used as the individual magnet 27, the magnet cost is low. In addition, there is an advantage that the magnet 27 having the same configuration can be used for detection devices having different sizes.

However, since the individual magnet 27 needs to be fixed to the support substrate 26 such that the magnetic pole boundary line 27a that cannot actually be visually recognized is aligned along the circumferential tangential direction, the assembly work is complicated, and accordingly, there is a problem that the assembly cost increases.

The configuration of PTL 3 can be classified into a category of the fourth comparative example.

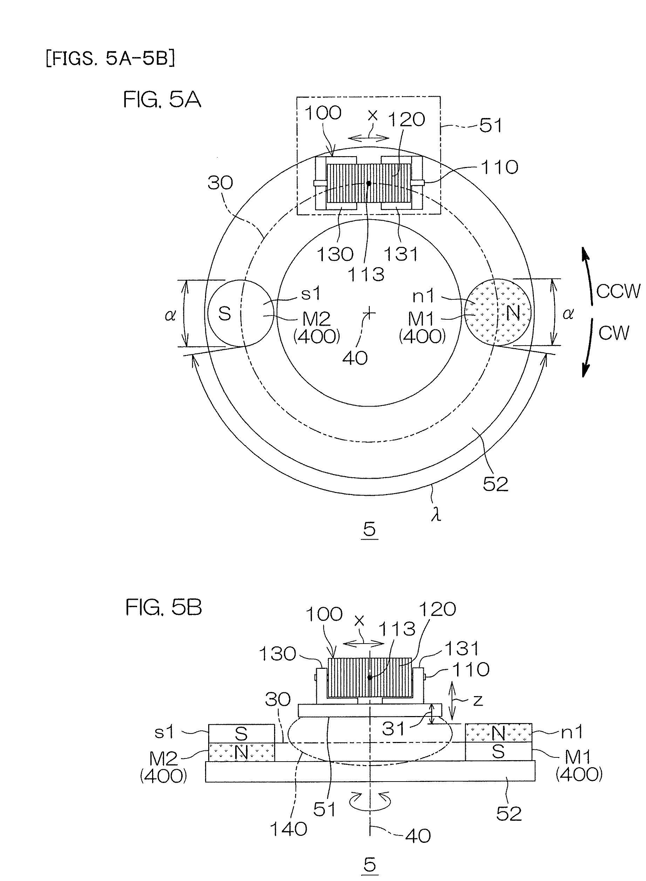

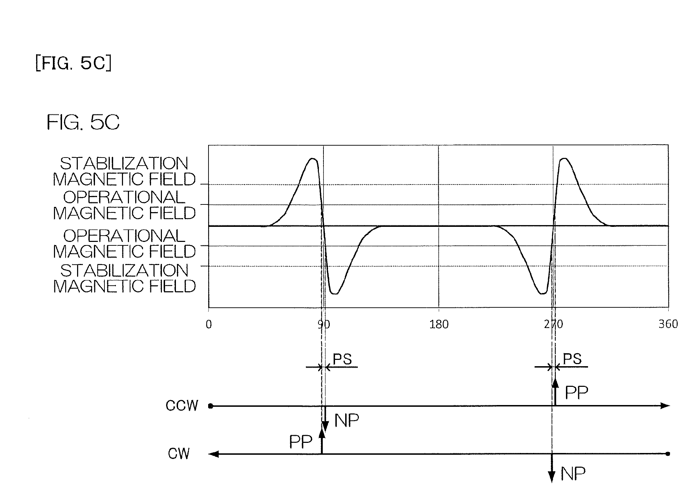

FIG. 5A and FIG. 5B show a rotation detection device 5 which is an example of a motion detection device according to an example embodiment of the present invention, and FIG. 5C shows a change in magnetic flux density with respect to a rotation angle.

The rotation detection device 5 includes a first supporting body 51, a second supporting body 52 that moves relative to the first supporting body 51, a power generation sensor 100 supported by the first supporting body 51, and a magnetic field source 400 supported by the second supporting body 52.

In this example embodiment, the first supporting body 51 is a support substrate, and the power generation sensor 100 is supported on one principal surface thereof. In this example embodiment, the second supporting body 52 is a ring-shaped support substrate that rotates around a rotation axis 40. The magnetic field source 400 includes a plurality of (two in this example embodiment) individual magnets M1 and M2 disposed on the second supporting body 52 with an interval therebetween in the circumferential direction.

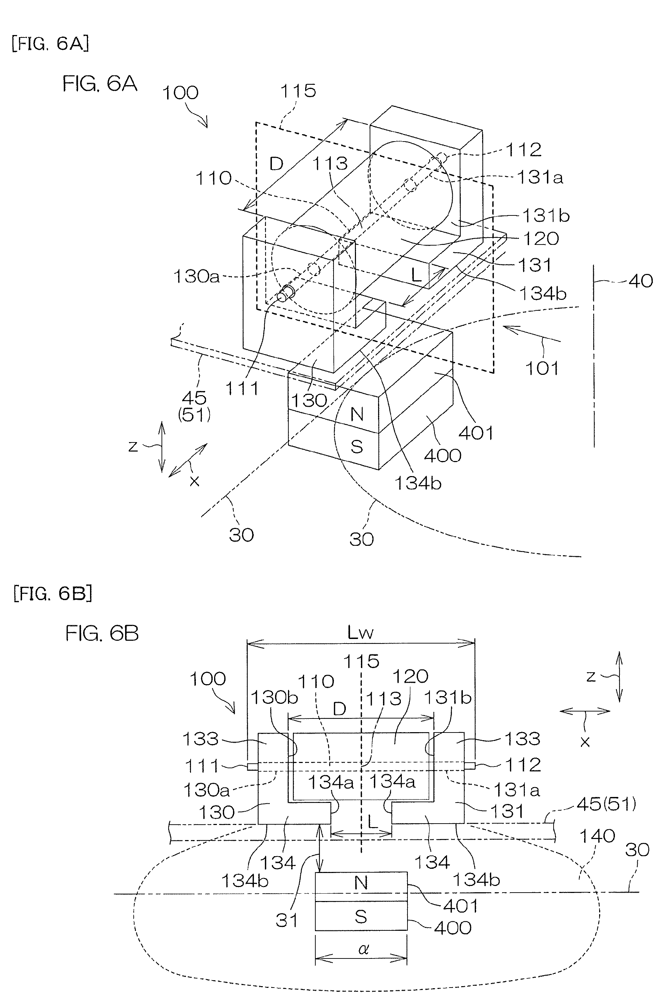

The power generation sensor 100 includes a magnetic wire 110, a coil 120 wound around the magnetic wire 110, and a pair of L-shaped magnetic flux conducting pieces 130 and 131 coupled to both end portions of the magnetic wire 110 and is configured such that a side of the second supporting body 52 (a lower side in FIG. 5B) is a detection region 140. A specific configuration example of the power generation sensor 100 will be described below with reference to FIG. 6A and FIG. 6B.

An axially-central position 113, which is an axially-central position of the magnetic wire 110, is radially offset from the rotation axis 40, and an axial direction x of the magnetic wire 110 extends in a circumferential direction around the rotation axis 40 (more specifically, a direction of a tangent at the axially-central position 113 on a circumference around the rotation axis 40 passing through the axially-central position 113 of the magnetic wire 110).

The two individual magnets M1 and M2 are magnetized in a direction parallel to the rotation axis 40 and are disposed at equal intervals, that is, at an angular interval of 180 degrees on the circumference around the rotation axis 40. One of the two individual magnets M1 and M2 is fixed to the second supporting body 52 with an N pole n1 disposed to oppose the power generation sensor 100 when approaching the power generation sensor 100, and the other thereof is fixed to the second supporting body 52 with an S pole s1 disposed to oppose the power generation sensor 100 when approaching the power generation sensor 100. When the second supporting body 52 rotates around the rotation axis 40, each of the magnetic poles n1 and s1 moves along a circumferential track 30.

As described above, the magnetic field source 400 has a plurality of magnetic poles n1 and s1 disposed on the second supporting body 52, and the plurality of magnetic poles n1 and s1 sequentially enter the detection region 140 along the track 30 substantially parallel to the axial direction x of the magnetic wire 110 when the second supporting body 52 rotates relative to the first supporting body 51 (an example of relative movement). At this time, the magnetic poles n1 and s1 having different polarities alternately oppose the power generation sensor 100 with a gap 31 therebetween. Since the individual magnets M1 and M2 are magnetized in a direction parallel to the rotation axis 40, a direction of the magnetic flux of each of the magnetic poles n1 and s1 is a direction perpendicular to a moving direction of each of the magnetic poles n1 and s1 and intersecting with the magnetic wire 110 when the magnetic poles n1 and s1 oppose the power generation sensor 100, that is, a direction (gap direction) in which the gap 31 between the magnetic poles n1 and s1 and the power generation sensor 100 opens.

An arrangement interval λ of the plurality of magnetic poles n1 and s1 on the track 30, that is, an interval between the magnetic poles n1 and s1 adjacent to each other in the circumferential direction is larger than an entire length Lw of the magnetic wire 110 (see FIG. 6B). More specifically, in this example, the arrangement interval λ is 1.5 times or more the entire length Lw of the magnetic wire 110. In addition, a length α of each of the magnetic poles n1 and s1 on the track 30 (the length along the track 30) is smaller than the entire length Lw of the magnetic wire 110 and 50% or less of the magnetic pole arrangement interval λ. In this example, the length α of each of the magnetic poles n1 and s1 on the track 30 is half or less of the entire length Lw of the magnetic wire 110.

When the two individual magnets M1 and M2 rotate together with the second supporting body 52 in the counterclockwise direction CCW, a positive pulse preparation state (positive set state) is established when the magnetic flux density falls below a negative stabilization magnetic field, and thereafter, a positive pulse PP is generated when the magnetic flux density exceeds a positive operational magnetic field. In addition, when the two individual magnets M1 and M2 rotate together with the second supporting body 52 in the counterclockwise direction CCW, a negative pulse preparation state (negative set state) is established when the magnetic flux density exceeds a positive stabilization magnetic field, and thereafter, a negative pulse NP is generated when the magnetic flux density falls below a negative operational magnetic field. Therefore, as illustrated in FIG. 5C, the negative pulse NP is generated in the vicinity of 90 degrees, and the positive pulse PP is generated in the vicinity of 270 degrees.

Similarly, when the two individual magnets M1 and M2 rotate together with the second supporting body 52 in the clockwise direction CW, a positive pulse preparation state (positive set state) is established when the magnetic flux density falls below a negative stabilization magnetic field, and thereafter, a positive pulse PP is generated when the magnetic flux density exceeds a positive operational magnetic field. In addition, when the two individual magnets M1 and M2 rotate together with the second supporting body 52 in the clockwise direction CW, a negative pulse preparation state (negative set state) is established when the magnetic flux density exceeds a positive stabilization magnetic field, and thereafter, a negative pulse NP is generated when the magnetic flux density falls below a negative operational magnetic field. Therefore, as illustrated in FIG. 5C, the positive pulse PP is generated in the vicinity of 90 degrees, and the negative pulse NP is generated in the vicinity of 270 degrees.

In the vicinity of 90 degrees and 270 degrees, the change in magnetic flux density with respect to the rotation angle is very steep. Therefore, variation in a pulse generation position is small, and moreover, shift of the pulse generation position according to a rotation direction, that is, a phase difference PS is extremely small. In addition, since an angular difference from the operational magnetic field to the stabilization magnetic field is very small, a range (inversion range) in which so-called pulse omission occurs when the moving direction (rotation direction) is inverted is narrow.

In addition, since a long axis direction of the power generation sensor 100 is the circumferential tangential direction, the outer shape of the rotation detection device 5 can be reduced. From another point of view, the diameter of the hollow portion of the second supporting body 52 can be increased. In addition, since general-purpose individual magnets M1 and M2 that can be produced by being magnetized in a thickness direction with an air-core coil can be used, the magnet cost can be reduced. As a matter of course, since the individual magnets M1 and M2 having the same design can be used for the rotation detection devices having different sizes in a general-purpose manner, a special magnet having a dedicated design is not required. Moreover, the N poles or the S poles of the individual magnets M1 and M2 magnetized in the thickness direction only have to be alternately oriented in one direction and fixed to the second supporting body 52, and the assembly work is simple as compared with the fourth comparative example in which the magnetic pole boundary needs to be aligned with the radial direction, and accordingly, the assembly cost can be reduced.

As described above, since the arrangement interval λ of the plurality of magnetic poles n1 and s1 on the track 30 is larger than the entire length of the magnetic wire 110 (preferably 1.5 times or more), as illustrated in FIG. 5C, a flat portion where the magnetic flux density becomes 0 appears in an middle region between 90 degrees and 270 degrees where the pulse is generated. As a result, the influence of the magnetic field from the magnetic poles n1 and s1 adjacent to each other on the track 30 can be separated, and the change in magnetic flux density in the vicinity of 90 degrees and 270 degrees can be made steep. This tendency is further strengthened by setting the length α of each of the magnetic poles n1 and s1 on the track 30 to 50% or less of the arrangement interval λ of the magnetic poles.

As described above, the length α of each of the magnetic poles n1 and s1 on the track 30 is smaller than the entire length of the magnetic wire 110. As a result, in the vicinity of 90 degrees and 270 degrees, a steep change in magnetic flux density can be secured without generating a flat portion in the change in magnetic flux density. It is preferable to set the length α of each of the magnetic poles n1 and s1 to half or less of the entire length of the magnetic wire 110, allowing the change in magnetic flux density to become steeper.

FIG. 6A is a perspective view for illustrating a configuration example of the power generation sensor 100, and FIG. 6B is a front view thereof as seen in an arrow direction 101 in FIG. 6A. When the power generation sensor 100 and a magnetic pole 401 of the magnetic field source 400 (for example, an individual magnet) move relative to each other, the power generation sensor 100 generates a pulse signal. The relative movement between the power generation sensor 100 and the magnetic field source 400 is achieved by the movement of at least one of the power generation sensor 100 and the magnetic field source 400. Hereinafter, an example in which the relative movement is achieved by the movement of the magnetic field source 400 will be mainly described.

The power generation sensor 100 includes the magnetic wire 110 exhibiting a large Barkhausen effect, the coil 120 wound around the magnetic wire 110, and the pair of magnetic flux conducting pieces 130 and 131 having magnetically-soft components. The coil 120 is wound around the magnetic wire 110 such that a first end portion 111 and a second end portion 112 of the magnetic wire 110 are exposed with the same length from the coil 120. In this example embodiment, the coil 120 is wound around the magnetic wire 110 between the pair of magnetic flux conducting pieces 130 and 131. The pair of magnetic flux conducting pieces 130 and 131 are respectively magnetically coupled to the first end portion 111 and the second end portion 112 of the magnetic wire 110.

The pair of magnetic flux conducting pieces 130 and 131 are configured to have substantially the same shape and substantially the same size. More specifically, the pair of magnetic flux conducting pieces 130 and 131 are configured to be symmetrical with each other with respect to a symmetry plane 115 (a virtual plane to be used to describe the geometric layout) which is orthogonal to the axial direction x (length direction, wire length direction) of the magnetic wire 110 through the center position (hereinafter referred to as "axially-central position") 113 of the magnetic wire 110 with respect to the axial direction x. The pair of magnetic flux conducting pieces 130 and 131 include axially-orthogonal portions 133 extending parallel to each other from both end portions 111 and 112 of the magnetic wire 110 in an axially-orthogonal direction z orthogonal to the axial direction x, and axially-parallel portions 134 extending toward each other from distal end portions of the axially-orthogonal portions 133 along the axial direction x.

The both end portions 111 and 112 of the magnetic wire 110 are respectively fixed to proximal portions of the axially-orthogonal portions 133 of the pair of magnetic flux conducting pieces 130 and 131. More specifically, wire placement portions 130a and 131a in which a hole or a groove is formed to penetrate the magnetic wire 110 in the axial direction x are provided at the proximal portions of the axially-orthogonal portions 133. FIG. 6A and the like illustrate an example in which the wire placement portions 130a and 131a are formed of holes. In a case where the wire placement portions 130a and 131a are each provided in the form of groove, the groove preferably extends in the axially-orthogonal direction z to open in an end surface opposite from a detection region 140 which will be described below. In a state where the first end portion 111 and the second end portion 112 of the magnetic wire 110 penetrate through the axially-orthogonal portions 133 by being placed in the wire placement portions 130a and 131a, the first end portion 111 and the second end portion 112 of the magnetic wire 110 are respectively fixed to the axially-orthogonal portions 133. More specifically, resins (not illustrated) are provided in the holes or the grooves formed as the wire placement portions 130a and 131a, and thus, the end portions 111 and 112 of the magnetic wire 110 are respectively fixed to and coupled with the axially-orthogonal portions 133. Thereby, the magnetic wire 110 is mechanically coupled to and magnetically coupled to the pair of magnetic flux conducting pieces 130 and 131.

The adjacent ends 134a of the axially-parallel portions 134 of the pair of magnetic flux conducting pieces 130 and 131 oppose each other with the symmetry plane 115 passing through the axially-central position 113 of the magnetic wire 110 therebetween. That is, the adjacent ends 134a of the axially-parallel portions 134 oppose each other with a gap therebetween in the axial direction x. The middle position of the gap between the adjacent ends 134a in the axial direction x corresponds to a position of the axially-central position 113 in the axial direction x, and therefore, distances in the axial direction x from the adjacent ends 134a of the pair of axially-parallel portions 134 to the symmetry plane 115 are equal. A distance L of the gap in the axial direction x is 5% to 50% and more preferably 20% to 40% of a distance D between the pair of axially-orthogonal portions 133 at the coupling positions between the magnetic wire 110 and the axially-orthogonal portions 133. More specifically, the distance D is a distance in the axial direction x between inner side surfaces 130b and 131b of the pair of magnetic flux conducting pieces 130 and 131 (inner side surfaces of the axially-orthogonal portions 133) that oppose each other in the axial direction x at the coupling positions between the magnetic wire 110 and the axially-orthogonal portions 133.

The magnetically-soft components constituting the magnetic flux conducting pieces 130 and 131 is preferably formed of a material having a coercivity not higher than that of the magnetic wire 110 and a relative magnetic permeability of not lower than 500. This material has characteristic properties such as lower magnetic resistance, smaller hysteresis and lower self-dielectric property. Thereby, even if a high-frequency alternating magnetic field generated when the magnetic field source 400 is moved at a higher speed is applied, the output characteristics of the power generation sensor 100 are not significantly influenced. Specifically, the magnetically-soft component is preferably made of an Ni-based ferrite material or an Mn-based ferrite material.

The power generation sensor 100 is configured such that a region located on a side of the axially-parallel portions 134 opposite from the magnetic wire 110 serves as the detection region 140. The magnetic field source 400 that generates a magnetic field to be detected is placed in the detection region 140. The power generation sensor 100 and the magnetic field source 400 are disposed so as to have the gap 31 in the axially-orthogonal direction z. The gap 31 may be a complete air gap, and for example, a printed circuit board 45 constituting the first supporting body 51 may be interposed. That is, the power generation sensor 100 may be disposed on one principal surface side of the printed circuit board 45, and the magnetic field source 400 may be disposed on the other principal surface side thereof. An electric component and/or an electronic component may be mounted on one or both principal surfaces of the printed circuit board 45. In one specific example, the power generation sensor 100 is mounted on one principal surface of the printed circuit board 45.

Typically, the magnetic field source 400 is moved relative to the power generation sensor 100 to pass through the detection region 140. That is, the detection region 140 is located on the movement path of the magnetic field source 400. In this example embodiment, the magnetic field source 400 includes the plurality of individual magnets magnetized in the axially-orthogonal direction z. As a result, the magnetic field source 400 has a plurality of magnetic poles 401 opposing the power generation sensor 100 (more specifically, the axially-parallel portion 134) when moving along the track 30 passing through the detection region 140.

In this example embodiment, the plurality of magnetic poles 401 are disposed such that magnetic poles 401 having different polarities alternately oppose the power generation sensor 100 when the second supporting body 52 moves relative to the first supporting body 51 (printed circuit board 45). The change in magnetic field generated when the magnetic pole 401 moves through the detection region 140 causes the power generation sensor 100 to output a pulse voltage. A position detection device that generates position information, that is, an encoder (an example of a motion detection device) can be configured by performing signal processing on the pulse voltage and counting the pulse voltage.

The moving direction of the magnetic pole 401 in the detection region 140, that is, the moving direction extends in the axial direction x. That is, the moving direction is substantially parallel to the magnetic wire 110. In other words, the track 30 has a portion substantially parallel to the axial direction x in the detection region 140. In one specific example, the track 30 has a linear portion parallel to the axial direction x in the detection region 140. The track 30 may be entirely linear or may have a curved portion. In another specific example, the track 30 has an arc portion having a tangent parallel to the axial direction x in the detection region 140. The arc portion may have a center on the rotation axis 40 parallel to the axially-orthogonal direction z. The track 30 may be entirely arcuate portion, that is, in a circumferential shape. In addition, the track 30 may have a portion having a shape other than an arc shape, such as a linear portion or an elliptical portion. In the example shown in FIG. 5A and FIG. 5B, the track 30 is circumferential.

The pair of magnetic flux conducting pieces 130 and 131 are configured such that a magnetic field generated in a space containing the magnetic flux conducting pieces 130 and 131 by the magnetic field source 400 placed in the detection region 140 is corrected into an axial magnetic field extending in the axial direction x and the axial magnetic field is applied to the magnetic wire 110.

More specifically, the magnetic flux conducting pieces 130 and 131 of the magnetically-soft components each include the generally rectangular parallelepiped-shaped axially-orthogonal portion 133, and the generally rectangular parallelepiped-shaped axially-parallel portion 134 extending from an end portion of the axially-orthogonal portion 133 opposing the magnetic field source 400 (i.e., the distal end portion of the axially-orthogonal portion 133 on the side of the detection region 140), and each have an L-shape bent at right angle at a connection portion between the axially-orthogonal portion 133 and the axially-parallel portion 134. The axially-parallel portions 134 extend in the axial direction x so as to cover the magnetic wire 110, i.e., to shield a space between the magnetic wire 110 and the detection region 140. The axially-parallel portions 134 of the pair of magnetic flux conducting pieces 130 and 131 having symmetrical shapes extend toward the axially middle side of the magnetic wire 110 with their adjacent ends 134a opposing each other and spaced a gap from each other near the axially-central position 113 of the magnetic wire 110. The adjacent ends 134a respectively have surfaces orthogonal to the axial direction x, and two planes respectively forming the two adjacent ends 134a are parallel to each other and oppose each other in the axial direction x. The distance L of the gap between the two adjacent ends 134a as measured in the direction x is a distance between the two planes forming the two adjacent ends 134a.

The magnetic flux conducting pieces 130 and 131 made of magnetically-soft components and the coil 120 are fixed to a case (not illustrated) that covers these components with the use of an adhesive resin, by fitting, or by other proper fixing means. As described above, the both end portions 111 and 112 of the magnetic wire 110 are fixed in the wire placement portions 130a and 131a made of two through holes or grooves by the resin (not illustrated) . Therefore, the power generation sensor 100 has a structure such that the pair of magnetic flux conducting pieces 130 and 131, the coil 120, and the magnetic wire 110 are fixed together for integration.

Both ends of the coil 120 may be connected to external electrodes provided in the axially-parallel portion 134. The power generation sensor 100 may be surface-mounted on the printed circuit board 45 by bonding the external electrode to a wiring conductor provided on one principal surface of the printed circuit board 45.

In the power generation sensor 100 configured as described above, a magnetic field in the detection region 140 is guided to the both end portions 111 and 112 of the magnetic wire 110 by the magnetic flux conducting pieces 130 and 131 having the magnetically-soft components. In addition, the axially-parallel portions 134 extending parallel to the axial direction x of the magnetic wire 110 are located between the detection region 140 and the magnetic wire 110, so that a magnetic flux directed from the detection region 140 toward an axially middle portion (axially intermediate portion) of the magnetic wire 110 is shielded by the axially-parallel portions 134. In particular, the distance L between the adjacent ends 134a of the axially-parallel portions 134 of the pair of magnetic flux conducting pieces 130 and 131 as measured in the axial direction x is 5% to 50% of the distance D between the axially-orthogonal portions 133 at coupling positions between the magnetic wire 110 and the axially-orthogonal portions 133. This provides an excellent magnetic shielding effect. The magnetic field can be applied in the axial direction x over a wider axial range of the magnetic wire 110 in the axial direction x. Thus, the large Barkhausen effect can be sufficiently exhibited, so that it is possible to obtain a high power output signal.

Moreover, the power generation sensor 100 includes the magnetic flux conducting pieces 130 and 131, and the magnetic flux conducting pieces 130 and 131 and the magnetic wire 110 are fixed and coupled to each other. Therefore, it is merely necessary to place a magnetic field source 400 (typically, a magnet) as a detection medium in the detection region 140. Accordingly, the power generation sensor can be easily combined with various magnetic field sources 400 having different shapes and/or different poles.

When the power generation sensor 100 and the magnetic field source 400 relatively move, the magnetic pole 401 of the magnetic field source 400 moves along the track 30 passing through the detection region 140. The track 30 includes a straight line portion parallel to the axial direction x in the detection region 140 or an arc portion having a tangent parallel to the axial direction x in the detection region 140. Therefore, when the magnetic pole 401 passes through the detection region 140, since the magnetic pole 401 opposes the axially-parallel portion 134, the magnetic flux generated by the magnetic pole 401 is applied to the magnetic wire 110 through the magnetic flux conducting piece 130 and 131.

Since the axially-parallel portions 134 of the magnetic flux conducting piece 130 and 131 extend in the axial direction x of the magnetic wire 110, the magnetic flux hardly enters the axially intermediate portion of the magnetic wire 110 from the magnetic pole 401 due to the magnetic shielding effect. The axially-parallel portion 134 extending in the axial direction x of the magnetic wire 110 can collect a large amount of magnetic flux. Therefore, even if the magnetic flux generated from the magnetic pole 401 is weak, a magnetic field necessary for exhibiting the large Barkhausen effect can be applied to the magnetic wire 110. In addition, the axially-parallel portion 134 can oppose the magnetic pole 401 in a wide range in the detection region 140 and suppresses the entry of the magnetic flux into the axially intermediate portion of the magnetic wire 110.

Therefore, the magnetic flux density in the magnetic wire 110 rapidly changes by slightly moving the magnetic pole 401 in any direction along the track 30 from a state in which the magnetic fluxes guided from the pair of magnetic flux conducting pieces 130 and 131 to the both end portions 111 and 112 of the magnetic wire 110 are balanced with the magnetic pole 401 opposing the axially-central position 113 of the magnetic wire 110. As a result, the change in magnetic flux density with respect to the change in position of the magnetic pole 401 becomes steep.

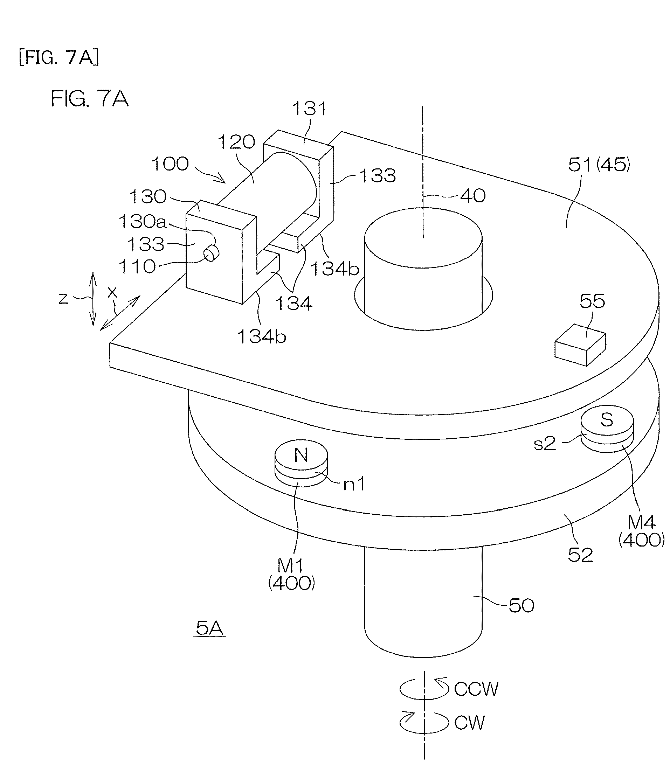

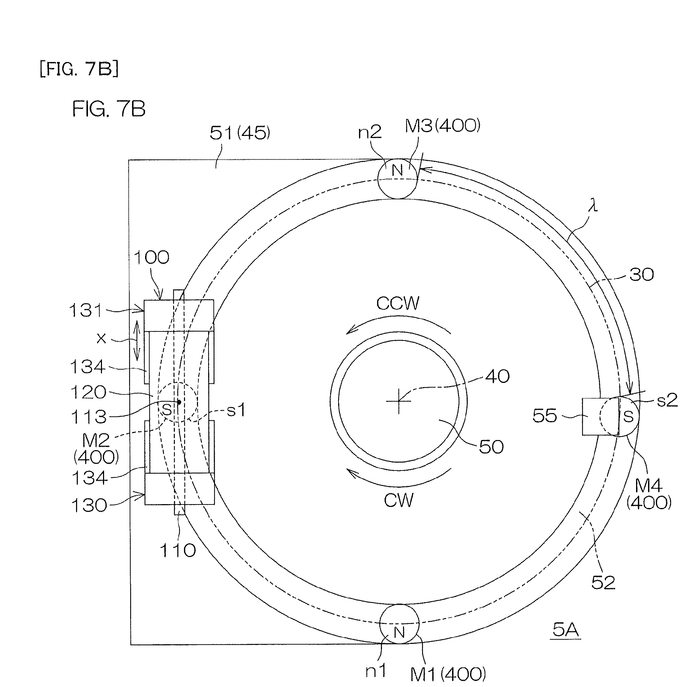

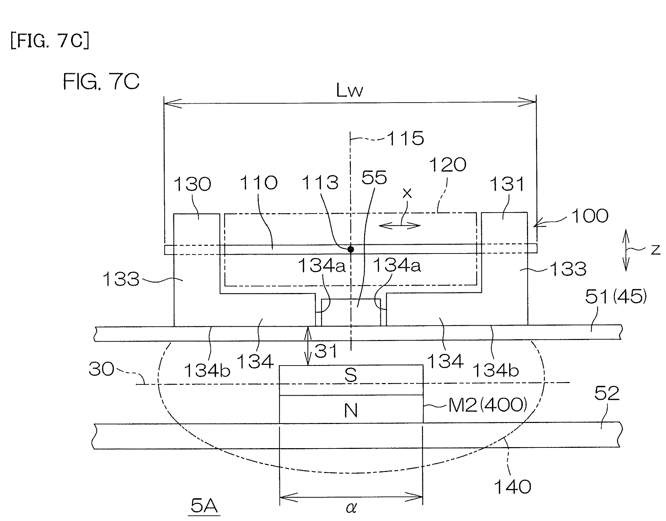

FIG. 7A is a perspective view for explaining a specific structural example of a rotation detection device 5A, and FIG. 7B is a plan view thereof. FIG. 7C is a front view illustrating a configuration in the vicinity of a power generation sensor 100 when viewed from the right side of FIG. 7B.

The rotation detection device 5A is an example of an encoder and detects a rotational position around a rotation axis 40 that coincides with a central axis of a rotation shaft 50. The rotation detection device 5A includes the power generation sensor 100 and a magnetic field source 400. The rotation detection device 5A further includes a sensor 55 (for example, a magnetic sensor) in this example. Although not illustrated, the rotation detection device 5A may further include a count processing circuit which performs signal processing on the pulse output generated by the power generation sensor 100 and counts the pulse output, a non-volatile memory which stores the counting result by the count processing circuit, and the like. The count processing circuit may be configured to perform a counting operation in consideration of the output from the sensor 55.

The power generation sensor 100 is disposed on a first supporting body 51 and supported by the first supporting body 51. In this example embodiment, the sensor 55 is also mounted on the first supporting body 51.

The magnetic field source 400 is fixed to a second supporting body 52. The second supporting body 52 moves relative to the first supporting body 51. Specifically, the second supporting body 52 is coupled (fixed) to the rotation shaft 50 and rotates around the rotation axis 40 together with the rotation shaft 50. Thus, the second supporting body 52 may be a part of a rotating body. In contrast, the first supporting body 51 is fixedly disposed and held in a non-rotating state. As a result, the magnetic field source 400 rotates around the rotation axis 40 together with the second supporting body 52 and moves relative to the first supporting body 51.

Typically, the rotation shaft 50 is rotated by a driving force from a driving shaft of an electric motor (not shown). When the electric motor is driven bidirectionally, the rotation shaft 50 accordingly rotates bidirectionally in the counterclockwise direction CCW and the clockwise direction CW. The first supporting body 51 may be a printed circuit board 45 disposed along a plane orthogonal to the rotation axis 40.

In this example, the magnetic field source 400 includes a plurality of, that is, 2k (k = 2 in the illustrated example) individual magnets M1, M2, ..., which are fixed to the second supporting body 52. The individual magnets M1, M2, ... are magnetized in a direction parallel to the rotation axis 40, that is, the axially-orthogonal direction z, and are disposed at equal angular intervals around the rotation axis 40. In this example, the individual magnets M1, M2, ... have a plate shape (more specifically, a disk shape) magnetized in the thickness direction, but the shapes of the individual magnets M1, M2, ... are not limited thereto. The magnet may have a rectangular parallelepiped shape or a rectangular plate shape as illustrated in FIG. 6A, and a magnet having an arc shape in a plan view (specifically, a fan shape obtained by cutting a radially inner portion) may be used.

In a plan view (see FIG. 7B) viewed from a direction parallel to the rotation axis 40, N poles n1, n2, ... and S poles s1, s2, ... are alternately arranged in the circumferential direction. That is, when the second supporting body 52 rotates in one direction around the rotation axis 40, the N poles and the S poles, which are magnetic poles having different polarities, alternately enter the detection region 140 (see FIG. 7C) of the power generation sensor 100, and an alternating magnetic field is generated in the vicinity of the power generation sensor 100.

The power generation sensor 100 is mounted on one principal surface of the first supporting body 51 (printed circuit board 45). The magnetic wire 110 of the power generation sensor 100 is on a tangent of a circumference centered on the rotation axis 40, and the axially-central position 113 of the magnetic wire 110 is on a contact point of the tangent (tangent point). The power generation sensor 100 is disposed such that when a center of one of the individual magnets M1, M2, ..., that is, any one of a plurality of magnetic poles n1, n2, ..., and nk; and s1, s2, ..., and sk, is aligned with the axially-central position 113 of the magnetic wire 110, magnetism conducted from the two magnetic flux conducting pieces 130 and 131 is balanced.

The axially-parallel portions 134 of the magnetic flux conducting pieces 130 and 131 form detection region opposing surfaces 134b which oppose the detection region 140 on a side of the detection region 140. The detection region opposing surface 134b is a flat surface parallel to the axial direction x. The detection region opposing surface 134b forms a magnetic flux conduction end that guides the magnetic flux from the magnetic pole to the inside of the magnetic flux conducting pieces 130 and 131 when the magnetic pole is disposed in the detection region 140.

The axially-parallel portions 134 of the magnetic flux conducting pieces 130 and 131 are bonded to a wiring pattern (not shown) formed on one principal surface of first supporting body 51 (printed circuit board 45), and thus the power generation sensor 100 is surface-mounted on first supporting body 51 (printed circuit board 45). The power generation sensor 100 is disposed such that the axial direction x of the magnetic wire 110 is along a tangent at one point (tangent point) on the circumference having a center on the rotation axis 40 and the axially-central position 113 of the magnetic wire 110 coincides with the tangent point. The detection region 140 of the power generation sensor 100 is located on the side opposite to the magnetic wire 110 with respect to the axially-parallel portions 134 and in this example, is a region on the other principal surface side of the first supporting body 51 (printed circuit board 45).

In this example, the second supporting body 52 is configured in an annular shape surrounding the rotation axis 40. More specifically, the second supporting body 52 is formed of an annular plate-shaped body, is disposed along a plane orthogonal to the rotation axis 40, and is parallel to the first supporting body 51 (printed circuit board 45). In the second supporting body 52, a plurality of individual magnets M1, M2, ... are fixed to a surface opposing the other principal surface of the first supporting body 51 (printed circuit board 45). In this example embodiment, the plurality of individual magnets M1, M2, ... are disposed at equal intervals in the circumferential direction around the rotation axis 40. In the illustrated specific example, four individual magnets M1, M2, M3, and M4 are disposed at an angular interval of 90 degrees around the rotation axis 40 and are fixed to the second supporting body 52 so as to oppose the first supporting body 51 (printed circuit board 45). The distance from the rotation axis 40 to the center of each of the individual magnets M1, M2, ... may be equal to the distance from the rotation axis 40 to the axially-central position 113 of the magnetic wire 110. That is, in a plan view along the rotation axis 40, the magnetic wire 110 and the individual magnets M1, M2, ... may be positioned on a circumference having an equal radius with the rotation axis 40 as a central axis, thereby being in a positional relationship capable of opposing each other in a direction parallel to the rotation axis 40. The second supporting body 52 is preferably a yoke made of a magnetically-soft body.

As the second supporting body 52 rotates around the rotation axis 40 together with the rotation shaft 50, the individual magnets M1, M2, ... move on the circumferential track 30 passing through the detection region 140 with the rotation axis 40 as a center. The axial direction x of the magnetic wire 110 is parallel to a tangent passing through a certain point (tangent point) on the circumferential track 30, and the axially-central position 113 is on a perpendicular line (in this example, a perpendicular line parallel to the rotation axis 40) erected on the tangent at the tangent point. In other words, the axially-central position 113 of the magnetic wire 110 is located at a certain point (tangent point) on the circumference centered on the rotation axis 40 and having a radius equal to that of the circumferential track 30, and the magnetic wire 110 is along the tangent at the tangent point.

The distance of each of the first supporting body 51 and the second supporting body 52 in the direction along the rotation axis 40 is set to an appropriate value at which the individual magnets M1, M2, ... can enter the detection region 140 of the power generation sensor 100 by the rotation of the second supporting body 52.

In the printed circuit board 45 constituting the first supporting body 51, the sensor 55 constituted by, for example, a magnetic sensor, is further mounted on the principal surface on which the power generation sensor 100 is mounted. Other electric components or electronic components such as the above-described count processing circuit and nonvolatile memory may be further mounted on the principal surface of the printed circuit board 45.

The sensor 55 is disposed so as to be able to detect the polarity of the magnetic pole opposing the central portion of the power generation sensor 100. The sensor 55 includes, for example, a magnetic sensor such as a Hall IC, outputs an H signal when detecting an N pole (when the N pole opposes the central portion of the power generation sensor 100), and outputs an L signal when detecting an S pole (when the S pole opposes the central portion of the power generation sensor 100). Accordingly, the sensor 55 determines the polarity of the magnetic pole passing through the vicinity thereof and as a result, outputs an identification signal for identifying the polarity of the magnetic pole opposing the central portion of the power generation sensor 100. In this example embodiment, the sensor 55 is disposed to detect the magnetic poles at a position of a phase difference of 180 degrees around the rotation axis 40, that is, at a position symmetrical with respect to the rotation axis 40, with respect to the power generation sensor 100. When k is an even number (for example, 2), the sensor 55 detects the magnetic pole having the same polarity as the magnetic pole opposing the central portion of the power generation sensor 100. When k is an odd number (for example, 3), the sensor 55 detects the magnetic pole having the polarity opposite to the magnetic pole opposing the central portion of the power generation sensor 100. In either case, the sensor 55 can detect the polarity of the magnetic pole opposing the central portion of the power generation sensor 100.

With such a configuration, each time one magnetic pole pair n1, s1; n2, s2; ...; or nk, sk passes through the detection region 140 along the circumferential track 30 by the rotation in the counterclockwise direction CCW around the rotation axis 40, one negative pulse NP and one positive pulse PP are sequentially generated (see FIG. 5C). In addition, each time one magnetic pole pair n1, s1; n2, s2; ...; or nk, sk passes through the detection region 140 along the circumferential track 30 by the rotation in the clockwise direction CW around the rotation axis 40, one positive pulse PP and one negative pulse NP are sequentially generated (see FIG. 5C). Then, the rotation position and the rotation direction can be identified by these pulses and the sensor 55 that outputs the identification signal representing the polarity of the magnetic pole on the circumferential track 30 between the magnetic flux conducting pieces 130 and 131.

Specifically, in a case in which the sensor 55 detects the N pole when the negative pulse NP is generated and in a case in which the sensor 55 detects the S pole when the positive pulse PP is generated, the rotation direction may be identified as the counterclockwise direction CCW. On the other hand, in a case in which the sensor 55 detects the N pole when the positive pulse PP is generated and in a case in which the sensor 55 detects the S pole when the negative pulse NP is generated, the rotation direction may be identified as the clockwise direction CW.

As in the case of the configuration illustrated in FIG. 6A and FIG. 6B, the arrangement interval λ of the plurality of magnetic poles on the track 30 is larger than the entire length of the magnetic wire 110. In this example, the arrangement interval λ is 1.5 times or more the entire length Lw of the magnetic wire 110. In addition, a length α of each of the magnetic poles on the track 30 (the length along the track 30) is smaller than the entire length Lw of the magnetic wire 110 and 50% or less of the magnetic pole arrangement interval λ. In this example, the length α of each of the magnetic poles on the track 30 is half or less of the entire length Lw of the magnetic wire 110.

With such a configuration, an effect similar to that of the configuration illustrated in FIG. 6A and FIG. 6B can be realized.

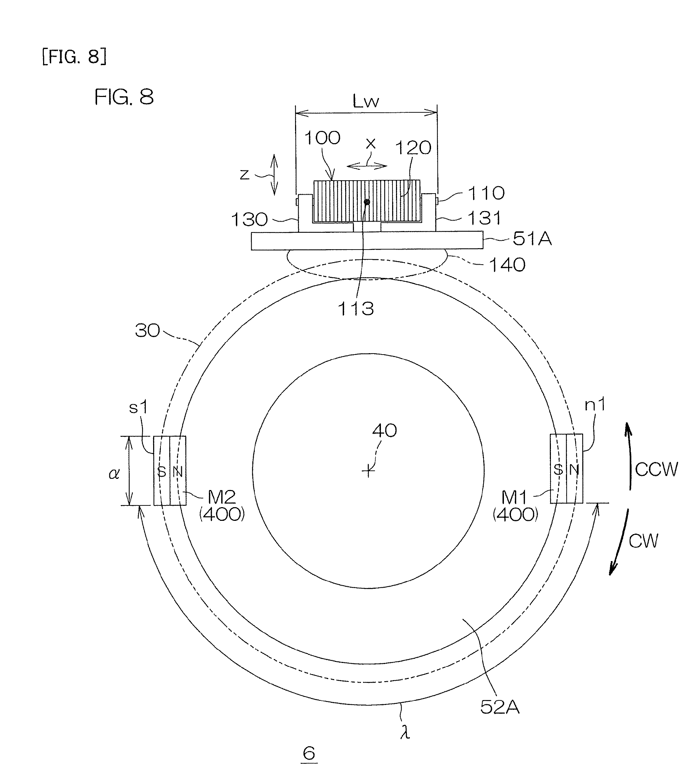

FIG. 8 is a plan view for describing the structure of a rotation detection device 6 which is an example of a motion detection device according to another example embodiment of the present invention.

The rotation detection device 6 includes a first supporting body 51A, a second supporting body 52A that moves relative to the first supporting body 51A, the power generation sensor 100 supported by the first supporting body 51A, and the magnetic field source 400 supported by the second supporting body 52A. In this example embodiment, the first supporting body 51A is a support substrate, and the power generation sensor 100 is supported on one principal surface thereof. In this example embodiment, the second supporting body 52A has a cylindrical shape and rotates around a rotation axis 40. The magnetic field source 400 includes a plurality of (two in this example embodiment) individual magnets M1 and M2 disposed on an outer peripheral surface of the second supporting body 52A with an interval therebetween in the circumferential direction.

The power generation sensor 100 has a configuration similar to that in the case of FIG. 6A or the like and includes the magnetic wire 110, the coil 120 wound around the magnetic wire 110, and the pair of L-shaped magnetic flux conducting pieces 130 and 131 coupled to both end portions of the magnetic wire 110 and is configured such that a side of the second supporting body 52A (side of the rotation axis 40) is the detection region 140. That is, the rotation detection device 6 is a radial gap type in which a direction (gap direction) in which a gap between the magnetic field source 400 (individual magnet) and the power generation sensor 100 opens is a radial direction.

An axially-central position 113 of the magnetic wire 110 is radially offset from the rotation axis 40, and an axial direction x of the magnetic wire 110 extends in a circumferential direction around the rotation axis 40 (more specifically, a direction of a tangent at the axially-central position 113 on a circumference around the rotation axis 40 passing through the axially-central position 113 of the magnetic wire 110). The two individual magnets M1 and M2 are magnetized in the radial direction (gap direction) orthogonal to the rotation axis 40 and are disposed at equal intervals, that is, at an angular interval of 180 degrees on the circumference around the rotation axis 40. One of the two individual magnets M1 and M2 is fixed to the second supporting body 52A with an N pole n1 disposed to oppose the power generation sensor 100 when approaching the power generation sensor 100, and the other thereof is fixed to an outer peripheral surface of the second supporting body 52A with an S pole s1 disposed to oppose the power generation sensor 100 when approaching the power generation sensor 100.

When the second supporting body 52A rotates around the rotation axis 40, each of the magnetic poles n1 and s1 moves along the circumferential track 30. As described above, the magnetic field source 400 has a plurality of magnetic poles n1 and s1 disposed on the second supporting body 52A, and the plurality of magnetic poles n1 and s1 sequentially enter the detection region 140 along the track substantially parallel to the axial direction x of the magnetic wire 110 when the second supporting body 52A rotates relative to the first supporting substrate (an example of relative movement). At this time, the magnetic poles n1 and s1 having different polarities alternately oppose the power generation sensor 100 with a gap therebetween. Since the individual magnets M1 and M2 are magnetized in the radial direction orthogonal to the rotation axis 40, a direction of the magnetic flux of each of the magnetic poles n1 and s1 is a direction perpendicular to a moving direction of each of the magnetic poles n1 and s1 and intersecting with the magnetic wire 110 when the magnetic poles oppose the power generation sensor 100, that is, a direction (gap direction) in which the gap between the magnetic poles n1 and s1 and the power generation sensor 100 opens.

An arrangement interval λ of the plurality of magnetic poles n1 and s1 on the track 30 is larger than the entire length of the magnetic wire 110. More specifically, in this example, the arrangement interval λ is 1.5 times or more the entire length Lw of the magnetic wire 110. In addition, a length α of each of the magnetic poles n1 and s1 on the track 30 (the length along the track 30) is smaller than the entire length Lw of the magnetic wire 110 and 50% or less of the magnetic pole arrangement interval λ. In this example, the length α of each of the magnetic poles n1 and s1 on the track 30 is half or less of the entire length Lw of the magnetic wire 110.

Also with this configuration, an effect similar to that of the configuration illustrated in FIG. 6A and FIG. 6B can be obtained.

The example embodiments of the present invention have been described above, but the present invention can be further implemented in other forms as will be illustrated below.

In the above-described example embodiments, a device that mainly detects rotation, that is, a device that detects relative movement along an endless track has been described, but a detection device that detects movement (linear movement or the like) along a finite track, such as an arc shape or a linear shape, can be similarly configured. In this case, at least one of the first supporting body on which the power generation sensor 100 is supported and the second supporting body on which the magnetic field source is supported moves along the track. The magnetic field source is supported by the second supporting body such that the magnetic poles having different polarities alternately enter the detection region of the power generation sensor 100 by movement in one direction. In the second supporting body, the N poles and the S poles only has to be alternately disposed along the track, and the total number of the magnetic poles may be an even number or an odd number.

In addition, in the above-described example embodiments, an example of the magnetic field source in which the plurality of magnetic poles are constituted by the plurality of individual magnets has been described, but the magnetic field source may be constituted by a multipolar magnetized magnet designed in accordance with a shape of a desired track. Specifically, in the case of the rotation detection device, the magnetic field source may be constituted by a ring-shaped multipolar magnetized magnet surrounding the rotation axis 40. For example, in the case of the configuration illustrated in FIG. 7A and the like, a ring-shaped hard magnetic body can be used as a magnetic field source by forming a plurality of magnetic poles by providing local magnetization regions (four magnetization regions) with an interval therebetween in the circumferential direction at the same positions as the individual magnets M1 to M4 with respect to the ring-shaped hard magnetic body. The magnetization direction is parallel to the rotation axis 40, that is, the axially-orthogonal direction z. The four-pole magnetized ring magnet thus obtained has a configuration in which k (k is a natural number. Preferably k ≥ 2. In the illustrated example, k=2.) magnetic pole pairs (pairs of N poles and S poles) in which the N poles and the S poles are alternately arranged are arranged on a circumference around the rotation axis 40 when viewed from one direction of the rotation axis 40 and has k N poles n1, n2, ..., nk and k S poles s1, s2, ..., sk. An arrangement interval λ of the plurality of magnetic poles (magnetization regions) on the track 30 is larger than the entire length Lw of the magnetic wire 110 and is preferably 1.5 times or more the entire length Lw of the magnetic wire 110. In addition, a length α of each of the magnetic poles (magnetization regions) on the track 30 (the length along the track 30) is smaller than the entire length Lw of the magnetic wire 110 and 50% or less of the magnetic pole arrangement interval A. The length α of each of the magnetic poles on the track 30 is preferably half or less of the entire length Lw of the magnetic wire 110.

Further, the magnetic pole does not need to be a magnet (magnetized hard magnetic body), and for example, a magnetically-soft body (yoke) that induces a magnetic flux from the magnet may be provided, and a surface (typically, an end surface) of the soft magnetic body may be used as the magnetic pole.

In addition, in the above-described example embodiments, the axially-orthogonal portion of the magnetic flux conducting piece has a first portion extending from the magnetic wire 110 toward the detection region 140 and a second portion extending from the magnetic wire 110 toward the side opposite to the detection region 140, but omitting the second portion does not substantially affect a magnetic flux conducting function (magnetism collecting function).

In addition, various design changes can be made within the scope of the matters described in the claims.

### DESCRIPTION OF REFERENCE CHARACTERS

5, 5A, 6: Rotation detection device
30: Track
31: Gap
40: Rotation axis
45: Printed circuit board
50: Rotation shaft
51, 51A: First supporting body
52, 52A: Second supporting body
55: Sensor
100: Power generation sensor
110: Magnetic wire
113: Axially-central position
115: Symmetry plane
120: Coil
130, 131: Magnetic flux conducting piece
130a, 131a: Wire placement portion
133: Axially-orthogonal portion
134: Axially-parallel portion
134a: Adjacent end
140: Detection region
400: Magnetic field source
401: Magnetic pole
Lw: Entire length of magnetic wire
M1, M2, M3, M4: Individual magnet
PP: Positive pulse
NP: Negative pulse
PS: Phase difference
n1, n2: N pole (magnetic pole)
s1, s2: S pole (magnetic pole)
x: Axial direction
z: Axially-orthogonal direction
λ: Arrangement interval of magnetic poles
α: Length of magnetic pole

## Claims

1. A motion detection device comprising:
a first supporting body;
a second supporting body that moves relative to the first supporting body;
a power generation sensor disposed on the first supporting body; and
a magnetic field source supported by the second supporting body,
wherein the power generation sensor includes a magnetic wire configured to exhibit a large Barkhausen effect, a coil wound around the magnetic wire, and a pair of magnetic flux conducting pieces that include a pair of magnetically-soft bodies symmetrical with each other with respect to a symmetry plane defined at a center position of the magnetic wire in an axial direction,
wherein the pair of magnetic flux conducting pieces include a pair of axially-orthogonal portions which extend parallel to each other from both end portions of the magnetic wire in an axially-orthogonal direction orthogonal to the axial direction and a pair of axially-parallel portions which extend toward each other from distal end portions of the pair of axially-orthogonal portions in the axial direction and have adjacent ends opposing each other with a gap therebetween in the axial direction, and the pair of magnetic flux conducting pieces have wire placement portions that are formed of holes or grooves passing through in the axial direction to which the axially-orthogonal portions and both end portions of the magnetic wire are fixed,
wherein the power generation sensor is configured to have a detection region located on a side of the axially-parallel portions opposite from the magnetic wire,
wherein the magnetic field source includes a plurality of magnetic poles that are disposed on the second supporting body such that when the second supporting body moves relative to the first supporting body, the magnetic poles sequentially enter the detection region along a track parallel to the axial direction of the magnetic wire and the magnetic poles having different polarities alternately oppose the power generation sensor with a gap therebetween,
wherein a direction of a magnetic flux of each magnetic pole is a direction perpendicular to a moving direction of the magnetic pole and intersecting with the magnetic wire when the magnetic pole opposes the power generation sensor,
wherein an arrangement interval of the plurality of magnetic poles on the track is larger than an entire length of the magnetic wire, and
wherein a length of the magnetic pole on the track is smaller than the entire length of the magnetic wire and 50% or less of the arrangement interval.

2. The motion detection device according to claim 1, wherein the length of the magnetic pole on the track is half or less of the entire length of the magnetic wire.

3. The motion detection device according to claim 2, wherein the arrangement interval of the magnetic poles on the track is 1.5 times or more the entire length of the magnetic wire.

4. The motion detection device according to any one of claims 1 to 3, further comprising a sensor to determine a polarity of the magnetic pole located in a central portion of the power generation sensor in the axial direction.
